Europäisches Patentamt

European Patent Office

Office européen des brevets

(11) Publication number: **0 064 936**

**A1**

(12) **EUROPEAN PATENT APPLICATION**

(21) Application number: **82710024.9**

(22) Date of filing: **30.04.82**

(51) Int. Cl.³: **F 02 C 6/06**
**F 02 C 7/36**
**//F02C7/32**

(30) Priority: **04.05.81 US 259961**

(43) Date of publication of application:
**17.11.82 Bulletin 82/46**

(84) Designated Contracting States:
**BE CH DE FR GB IT LI NL SE**

(71) Applicant: **Norwalk-Turbo, Inc.**
**7 Northway Lane**
**Latham New York 12110(US)**

(72) Inventor: **Pilarczyk, Karol**
**6 Pepper Lane**
**Loudonville New York 12211(US)**

(74) Representative: **Altenburg, Udo, Dipl.-Phys. et al,**
**Patent- und Rechtsanwälte**
**PAGENBERG-DOST-ALTENBURG & PARTNER Postfach**
**86 06 20 Galileiplatz 1**
**D-8000 München 86(DE)**

(54) **High output gas turbine and closely coupled shaft drive load.**

(57) A high output gas turbine engine arranged in closely coupled relationship with a shaft driven load such as a compressor, generator or pump. The gas turbine engine has the output end of its power transfer shaft adjacent its air inlet duct and remote from its hot gas discharge outlet with the output end of the power transfer shaft mechanically coupled to the shaft of the load. An engine support frame mechanically couples the air inlet end of the engine housing to the housing of the driven load to support the gas turbine engine in a close coupled, concentric relationship thereform. An auxiliary gear box with a horizontal mesh is positioned below the gas turbine engine for supplying lubricating oil to the engine load and control of engine operation.

Fig. 1

- 1 -

Background of the Invention

The present invention relates to gas turbine driven loads such as high speed centrifugal compressors, generators and pumps.

Centrifugal compressors find applications in various fields and increasing utility in the expanding natural gas industry for such services as gas gathering, boosting, transmission, repressuring and distribution, and the like. In the gas boosting area particularly, there is a need for high speed centrifugal compressors which will operate relatively maintenance free, are compact for each of transportation and installation on site, such as offshore oil and gas platforms, and which are driven by prime movers which use readily available energy sources. Thus, it is desirable in the natural gas industry, as well as in the process industry, to have available a high-speed compressor which together with its prime mover provides compact, efficient, comparatively maintenance free operation. Additionally, there is a need for gas turbine driven generators and suction pumps for installation on site, such as offshore oil and gas platforms.

Centrifugal compressors have only been able to operate at high shaft speeds through the use of gear trains interposed between the compressor and the prime mover. However, the use of gear trains not only requires operation supervision, because of lubrication requirements and the like, but may also give rise to maintenance problems typically associated with the presence of moving parts which are subject to wear and breakdown. In addition, the presence of a gear train increases the size and weight of the overall compressor-prime mover unit. While gas turbine engines are capable of delivering high horse power in a compact unit and can provide high shaft speed, their use to drive centrifugal compressors has heretofore not been entirely satisfactory. In particular, the use of turbine engines to drive compressors has led to disadvantages arising from problems of mechanical alignment due to the mechanical coupling between the compressor shaft and the turbine engine power output shaft. These mechanical alignment problems are compounded where the turbine engine has mechanically connected gas compressor and power turbine stages.

United States Patent 4,057,371, filed in the name of Karol Pilarczyk for a GAS TURBINE DRIVEN HIGH SPEED CENTRIFUGAL COMPRESSOR UNIT, the disclosure of which is hereby incorporated by reference, provides a combined high speed centrifugal compressorprime mover unit which is both compact and efficient in operation and free from alignment and maintenance problems and highly suitable for process and natural gas industry uses including uses as diverse as offshore platform gas operations. However, such a unit has the gas discharge outlet for discharging the gas adjacent the coupling of the output end of the turbine power shaft and the input shaft of the driven load. Such an arrangement places the hot exhaust gas adjacent the intercoupled shafts.

## Summary of the Invention

It is an object of the present invention to provide a high output closely coupled gas turbine engine and shaft driven load which overcomes the disadvantages of prior art systems.

It is a further object to provide a closely coupled, concentric arrangement for supporting the gas turbine engine from the shaft driven load.

It is a still further object to provide an improved gearbox having a horizontal mesh to enable gravity feeding of lubricating oil therethrough which eliminates lubrication complexity and minimizes the use of bevel . gears, while being readily removable as a module·.

The present invention overcomes the disadvantages of prior art turbine engine and shaft driven loads by having the output end of its power transfer shaft adjacent the air inlet means of the gas turbine and remote from the exhaust gas discharge outlet, with the output end of the power transfer shaft being flexibly coupled to the input shaft of the driven load, a support frame for mechanically coupling the engine housing at the air inlet end to the housing of the driven load to support the gas turbine in a closely coupled concentric arrangement from the driven load. Advantageously, an improved gear box is provided for use with the gas turbine to supply lubricating oil to the engine and load.

Other objects, aspects and advantages of the present invention will be apparent when the following detailed description is considered in conjunction with the drawings as follows:

Description of the Drawings

FIGURE 1 is a side elevational view of a gas turbine and compressor system in accordance with the present invention;

FIGURE 2 is a simplified view of the internal components of the gas turbine of FIGURE 1;

FIGURE 3 is a partial view of FIGURE 1, with parts broken away, showing the coupling and support frame of interconnecting the gas turbine and compressor of FIGURE 1;

FIGURE 4 is a top plan view of the improved gear box arrangement and oil supply thereto; and

FIGURE 5 is a sectional view along lines 5 - 5 of FIGURE 4.

Detailed Description of the preferred Embodiment

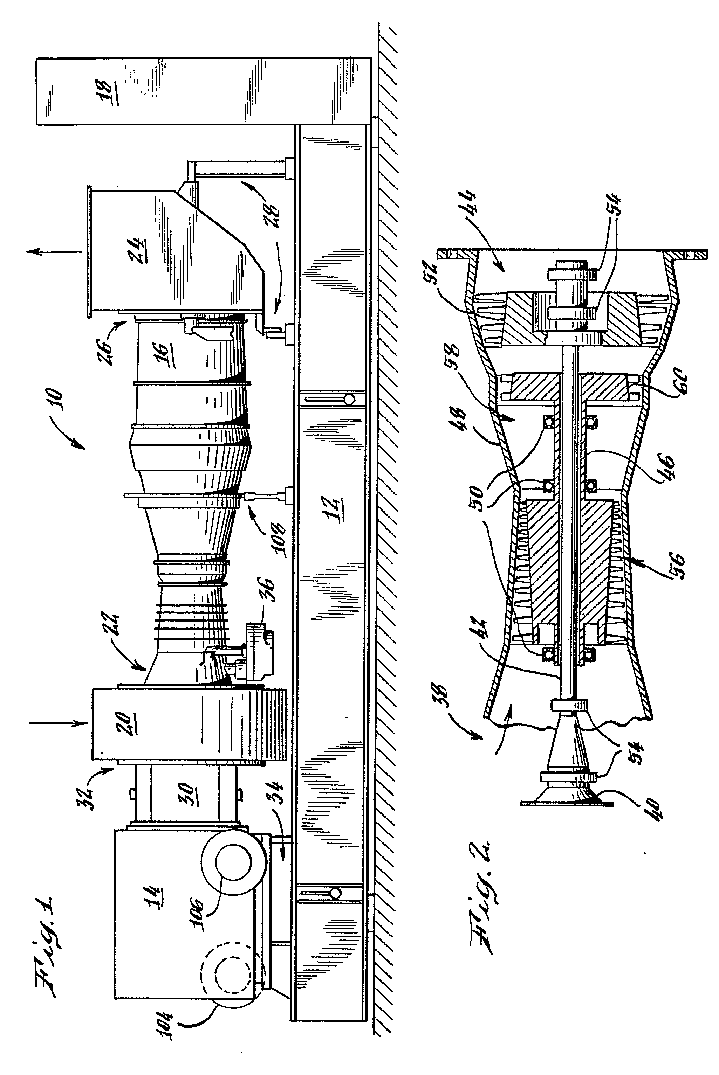

Referring to FIGURE 1, the assembled gas turbine and compressor system is indicated generally at 10. The system 10 includes a rigid base plate 12 on which is mounted a centrifugal compressor 14, a gas turbine engine 16 and a control system 18, preferably capable of continuous duty and fully automatic operation. As indicated in aforementioned United States Patent 4,057,371, the control system 18 may include means for indicating speed, pressure and temperature, as well as automatic starting, running and protective shut down controls.

The gas turbine engine 16 includes an air inlet duct or housing 20 at one end 22 and a hot gas outlet or discharge duct 24 at the other end 26. The hot gas discharge duct 24 is mounted to the base 12 with a pin and strut arrangement indicated at 28 to accommodate axial expansion of the gas turbine 16 into the duct 24 during operation. The air inlet housing 20 is mounted to the compressor 14 with a support frame 30 which mechanically couples end 32 of the air inlet housing 20 to the compressor 14. The compressor 14 is mounted to the base 12 through pedestal 34.

Advantageously, the gas turbine and compressor system 10 includes a gear box 36, driven by the gas turbine engine 16, which has its mesh (not shown) arranged below the gas turbine engine 16 in a plane parallel to the base 12 and the longitudinal axis of the gas turbine engine 16.

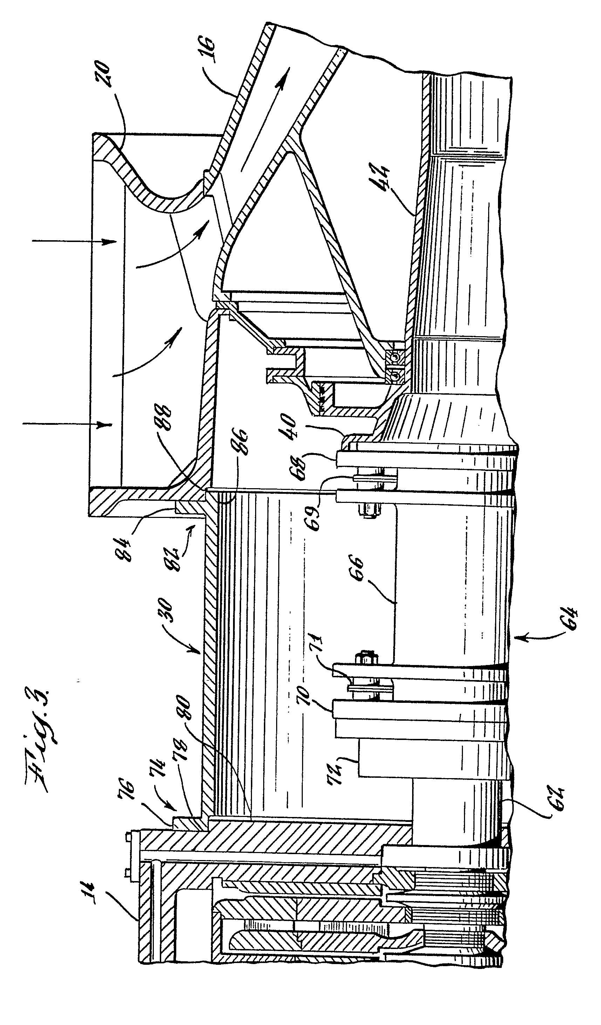

Referring to FIGURE 2, a simplified version of the internal components of the gas turbine engine 16 is illustrated. The gas turbine engine 16 is a conventional type, such as the LM500 Gas Turbine available from General Electric having a base horsepower of 5,200 and an output shaft speed of 7,000 RPM, in which the air inlet 38 is adjacent the output end 40 of the power transfer shaft 42 and the hot gas discharge outlet 44 is remote from the output end 40 of the power transfer shaft 42. Moreover, in such an engine 16 the gas generator shaft 46 is arranged concentric with the power transfer shaft 42 for rotation relative to the housing 48 of the engine 16 on bearings 50. The power transfer shaft 42 is integrally coupled to the power turbine rotor 52 and mounted on bearings 54 for rotation relative to the housing 48. There is no mechanical connection between the gas generator shaft 46 and the power transfer shaft 42. Gas generator rotor section 56 compresses the entering air prior to feeding to the combustion chamber indicated generally at 58 where the air and gas are mixed and ignited. The exiting gas drives rotor 60 which rotates the gas generator rotor section 56 through integrally coupled gas generator shaft 46. The exiting gas after passing through the rotor 60 drives the power turbine 52 which rotates the power transfer shaft 42 integrally coupled thereto.

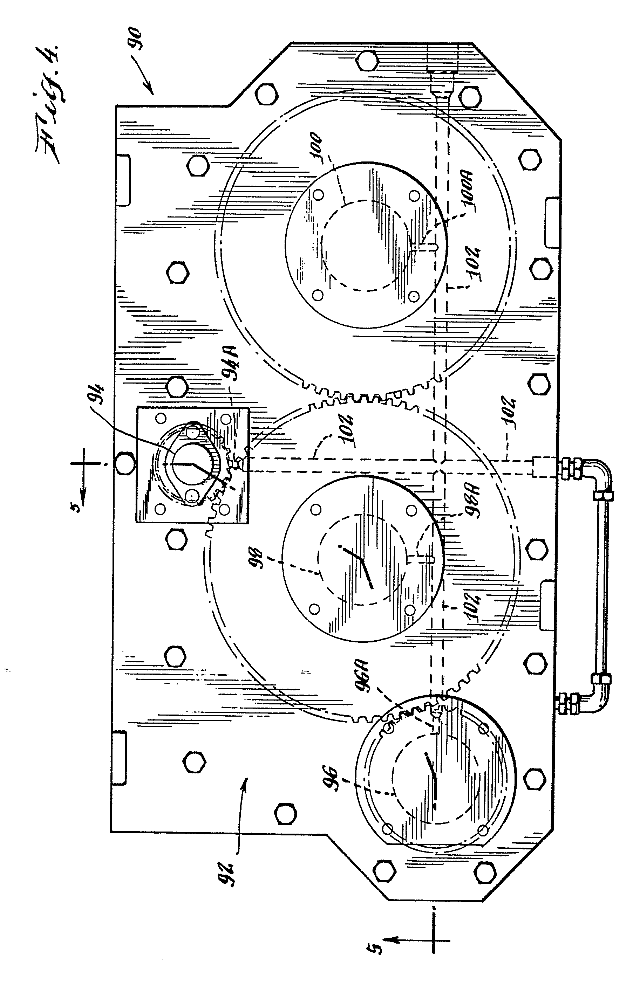

Referring to FIGURE 3, the interconnection of the gas turbine engine 16 and compressor 14 is shown. The compressor 14 is preferably a radial outflow centrifugal compressor of the type disclosed in United States Patent 4,057,371. Natural gas compression at pressure ratios of up to 6 to 1 may be obtained in a compact and efficient compressor-turbine unit. Typically, the input shaft 62 of the compressor 14 is driven at 7,000 RPM to match the RPM of turbine power shaft 42 for providing low natural gas compression ratios or at 15,000 to 20,000 RPM to provide high compression ratios. In the latter case a speed increasing gear (not shown) is coupled between the power transfer shaft 42 of the gas turbine 16 and the input shaft 62 of the compressor 14. However, it should be understood that if instead of a compressor 14 it is desired to drive a generator, a speed reducing gear would be arranged between the shafts to reduce the shaft speed of the generator to 1,800 RPM for United States voltage and 1,500 RPM for European voltage. Further, the load to be driven by the gas turbine 16 may be a pump, instead of a compressor 14 or generator, with speed reducing or increasing gears employed as desired.

The input shaft 62 of the compressor 14 and output end 40 of the turbine power transfer shaft 42 are closely coupled together with a flexible disc coupling 64 of the type available as Series 71 from Rexnord, or a splined tooth coupling of the type disclosed in the aforementioned United States Patent 4,057,371. Such couplings enable ready and reliable adjustment between shafts 62 and 42 to compensate for any distortion or misalignment therebetween due to expansion or shipment. The flexible disc coupling 64 includes a center member 66 bolted at one end 68 to a flexible member 69 such as a series of thin discs, which in turn are bolted to the output end 40 of the power transfer shaft 42.

The other end 70 of the center member 66 is bolted to a flexible member 71 such as the series of thin discs, which in turn are bolted to a hub member 72 which is mounted on the input shaft 62, e.g., by press fitting or keying. However, it should be understood that the center member 66 is movable relative to the shafts 42 and 62 to accommodate misalignment thereof.

Concentric with the coupling 64 and shafts 62 and 42 is the engine support frame 30 which supports the gas turbine engine 16 in cantilevered relationship from the compressor 14 or other drive devices such as gear boxes or pumps and provides a guard for the coupling 64. One end 74 of the engine support frame 30 includes a radial outwardly extending flange 76 which seats on a mating flange or stepped cylinder portion 78 of the compressor housing 80 and is bolted thereto. The other end 82 of the engine support frame 30 includes a radial outwardly extending flange 84 which rests against a mating portion of the air inlet duct 20 and a longitudinal extension 86 which seats in an annular recess 88 in the air inlet duct 20. The two flanges 76 and 84 are bolted to the compressor housing 80 and the engine housing at the air inlet end 20 respectively, to prevent movement of the gas turbine engine 16 and compressor 14 relative to the one another and to support the air inlet duct 20 and therefore the gas turbine 16 in cantilever fashion from the compressor housing 80.

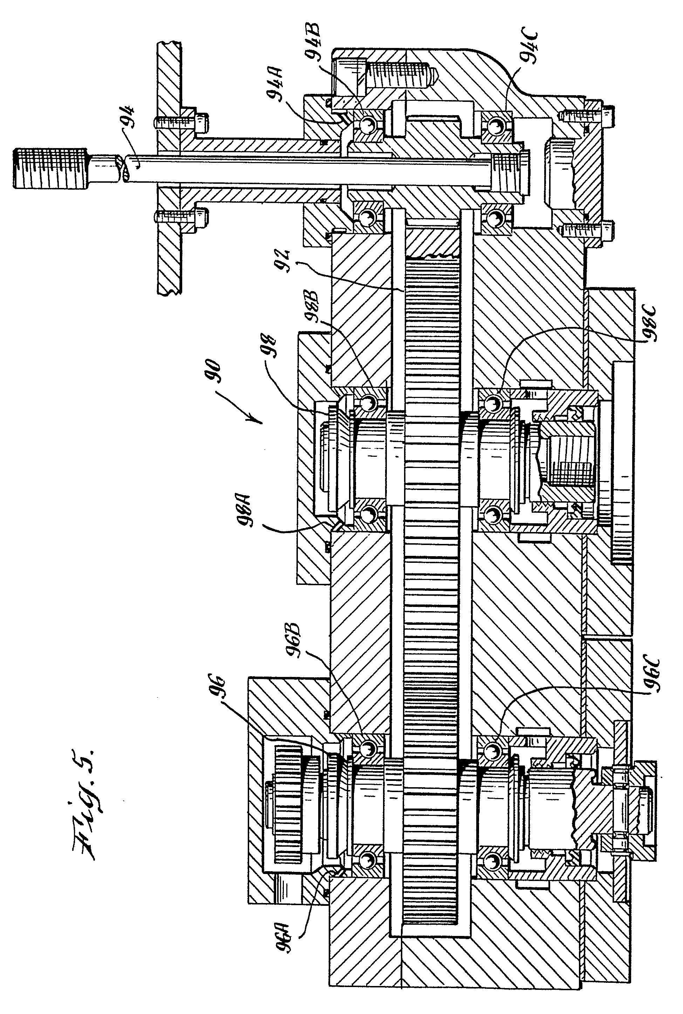

Referring to FIGURE 4, the improved gearbox is generally indicated at 90. The gearbox 90 is arranged so that its mesh 92, better seen in FIGURE 5, is arranged in a horizontal plane. The input shaft 94 of the gearbox 90 is mechanically coupled to turbine power shaft 42 and driven thereby through suitable bevel gears (not shown). Output shafts 96, 98 and 100 are driven by the input shaft 94 through the gear mesh 92. Advantageously, oil supply channels 102 are arranged in the gearbox 90 for communication with the shafts 94, 96, 98 and 100 and their associated bearings, better seen in FIGURE 5. An oil drain (not shown) collects the oil as it is gravity fed from the oil inlets 94A, 96A, 98A, and 100A, associated with the shafts 94, 96, 98, and 100, respectively, through the bearings and the gear mesh 92, see FIGURE 5.

As seen in FIGURE 5, each of the shafts 94, 96, 98 and 100 has associated with it a pair of upper and lower bearings 94B and C, 96B and C, 98B and C, and 100 B and C (not shown). The shafts 94, 96, 98 and 100 rotate relative to gearbox 90 through their respective bearings as a result of the rotation of the horizontal gear mesh 92 and the shaft 94. Advantageously, lube oil, scavenge and seal pumps (not shown) are coupled to the shafts 96, 98 and 100 for circulating lubricating oil to the gas turbine engine 16 and compressor 14. Further, a turbine starter drive (not shown) may be coupled to the remaining shaft, e.g., 96.

Advantageously, the gearbox 90 is located below the gas turbine engine 16 near the oil reservoir (not shown) to minimize the NPSH (net positive suction head) to prevent cavitation. Further, with a horizontal gear mesh 92, i.e., plane of gear mesh 92 parallel to base 12 and below the gas turbine engine 16, only one bevel gear (not shown) is required for coupling the output shaft 94 to the power transfer shaft 42 and the horizontal mesh arrangement allows gravity feeding of the oil through the bearings and the mesh 92. Additionally, with a gearbox 90 as described, the gearbox may be readily removed as necessary by dropping it downward and removing the shaft 94.

In operation, the gas turbine engine 16 is initially started by rotating the compressor assembly by external means to a speed sufficient to provide a continuous supply of compressed air to the combustion chamber 58 for ignition. The hot exhaust gases exiting from the combustion chamber 58 and rotor 60 drive the power turbine rotor 52 which in turn rotates the power transfer shaft 42 and the input shaft 94 to the gearbox 90. Rotation of the input shaft 94 drives the horizontal gear mesh 92 which activates the pumps for the unit. The power transfer shaft 42 rotates the shaft 62 of the compressor 14 through the flexible coupling 64. Natural gas supplied to the inlet 104 of the compressor 14 is compressed and

0064936

exits from the compressor 14 through the outlet 106, see FIGURE 1. If it is desired to compress the natural gas to high pressures, the compressor 14 may include two inlets and two outlets so that entering gas passes through one-half of the compressor and is exited for cooling and then is recirculated back through the other half of the compressor 14. The gas entering compressor is compressed in the compressor stages in the same manner as disclosed in United States Patent 4,057,371.

Advantageously, as seen in FIGURE 1 and 3, the gas turbine engine 16 is supported at its center from the base 12 with a v-shaped brace and collar structure 108 which allows axial growth, and in cantilever fashion from the compressor 14 through engine support frame 30 as shown in more detail in FIGURE 3. It should be understood by those skilled in the art that various modifications may be made in the present invention without departing from the spirit and scope thereof as described in the specification and defined in the appended claims.

Claims

1. A gas turbine engine in closely coupled relationship with a shaft driven load, comprising:

a gas generator section:

a power turbine section having a power transfer shaft with an output end;

air inlet means for supplying air to the gas turbine engine, said air inlet means being positioned adjacent the output end of said power transfer shaft;

hot gas discharge means for discharging the hot gases from the gas turbine engine, said hot gas discharge means being positioned remote from said output end of said power transfer shaft;

coupling means for flexibly coupling said output end of said power turbine shaft to the shaft of said shaft driven load; and

a support frame for mechanically coupling the engine housing at the air inlet means to the housing of said shaft driven load for supporting the gas turbine engine in close concentric arrangement fashion from said driven load.

2. A gas turbine engine in closely coupled relationship with a shaft driven load as recited in Claim 1, wherein:

said support frame is a cylindrical member which is coupled onto juxtaposed ends of said housing of said turbine and the housing of said driven load in close concentric alignment.

0064936

3. A gas turbine engine in closely coupled relationship with a shaft driven load as recited in Claim 1 or 2 wherein:

said coupling means flexibly couples said power transfer shaft to the shaft of said shaft driven load to accommodate distortion and misalignment of said shafts.

4. A gas turbine engine in closely coupled relationship with a shaft driven load as recited in Claims 1, 2 or 3, wherein:

said shaft driven load is a compressor.

5. A gas turbine engine in closely coupled relationship with a shaft driven load as recited in Claims 1, 2 or 3, wherein:

said shaft driven load is a generator connected through a gear reducing mechanism.

6. A gas turbine engine in closely coupled relationship with a shaft driven load as recited in Claims 1, 2 or 3, wherein:

said shaft driven load is a pump.

7. An auxiliary gearbox arrangement for a gas turbine and closely coupled shaft driven load, comprising:

input drive shaft means for said gearbox arrangement;

said gearbox arrangement having a horizontal gear mesh positioned below the gas turbine;

oil inlet channels for feeding oil to said horizontal gear mesh; and

output shaft means coupled to said horizontal gear mesh for driving auxiliary equipment.

8. An auxiliary gearbox arrangement as recited in Claim 7, wherein:

said gas turbine rotates said input drive shaft means.

9. An auxiliary arrangement as recited in Claim 7 or 8 wherein:

said output shaft means include bearings through which the oil is gravity fed.

10. An auxiliary arrangement as recited in Claim 7,8 or 9 wherein:

said horizontal gear mesh is arranged below the gas turbine in a plane parallel to the longitudinal axis of the gas turbine.

Fig.1

Fig.2

0064936

*Fig. 3.*

0064936

Fig. 4.

*Fig.5.*

96

96A

96B

98A

90

98

98B

92

94A

94B

94C

96C

98C

94

4/4

0064936

European Patent
Office

**EUROPEAN SEARCH REPORT**

Application number

EP 82 71 0024

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | WO-A-8 002 542 (DECHAUX) <br> * Page 1, line 12 - page 2, line 23; figure 1 * | 1,3,4 | F 02 C 6/06 <br> F 02 C 7/36 // <br> F 02 C 7/32 |
| D,A | US-A-4 057 371 (PILARCZYK) <br><br> * Whole document * | 1,3,4, 7,8 | |
| A | US-A-3 830 056 (WILLIS) <br> * Column 3, line 10 - column 4, line 10; figure 1 * | 1,2,5 | |
| A | US-A-4 141 212 (KOSCHIER) <br> * Column 2, line 21 - column 7, line 4; figures 1-3 * | 1,7,8 | |
| A | FR-A-2 015 354 (ROLLS-ROYCE) <br> * Whole document * | 7,8,10 | **TECHNICAL FIELDS SEARCHED (Int. Cl. 3)** |
| A | FR-A-2 148 942 (BENNES MAREL) | | |
| A | GB-A-2 024 326 (GARRETT) | | F 02 C <br> F 01 D <br> F 04 D |
| A | MOTORTECHNISCHE ZEITSCHRIFT, vol. 31, no. 5, May 1970, pages 226-228, <br> J. VOGTS: "Eine neue Hilfsgasturbine fur die Luftfahrt" * Figure 8 * | | |

The present search report has been drawn up for all claims

| Place of search | Date of completion of the search | Examiner |
|---|---|---|
| THE HAGUE | 13-08-1982 | IVERUS D. |